# EUROPÄISCHE PATENTSCHRIFT

(11) **EP 2 291 451 B1**
(45) Veröffentlichungstag und Bekanntmachung des Hinweises auf die Patenterteilung: **23.10.2013**
(21) Anmeldenummer: 09765535.1
(22) Anmeldetag: 04.06.2009
(51) Int. Cl.: C08L 25/12, C08L 51/08, C08L 69/00

(54) **SCHLAGZÄHMODIFIZIERTE POLYCARBONAT-ZUSAMMENSETZUNGEN**
IMPACT-RESISTANT MODIFIED POLYCARBONATE COMPOSITIONS
COMPOSITIONS DE POLYCARBONATE À MODIFICATION CHOC

(30) Priorität: 16.06.2008 DE 102008028571
(43) Veröffentlichungstag der Anmeldung: 09.03.2011
(73) Patentinhaber: Bayer Intellectual Property GmbH, 40789 Monheim (DE)
(72) Erfinder: FELDERMANN, Achim, 40477 Düsseldorf (DE); SEIDEL, Andreas, 41542 Dormagen (DE); WENZ, Eckard, 50996 Köln (DE)
(74) Vertreter: BIP Patents
(86) Internationale Anmeldenummer: PCT/EP2009/003982
(87) Internationale Veröffentlichungsnummer: WO 2009/152955

(56) Entgegenhaltungen:
- EP-A2- 0 663 425
- WO-A1-2008/086961
- DE-A1- 19 635 078

## Beschreibung

Die vorliegende Erfindung betrifft alterungsstabile, schlagzähmodifizierte Polycarbonat-Zusammensetzungen und Formmassen, die sich durch eine verbesserte Balance aus multiaxialer Tieftemperaturzähigkeit und Fließfähigkeit, gute Einfärbbarkeit und eine hohe Wärmeformbeständigkeit auszeichnen.

Zusammensetzungen enthaltend Polycarbonat, Pfropfpolymer auf Basis kautschukelastischer, alterungsstabiler Pfropfgrundlage und vinylaromatisches Copolymer sind grundsätzlich bekannt.

DE-A 4434965 beispielsweise offenbart solche Zusammensetzungen mit verbesserter Balance aus Kältezähigkeit, Steifigkeit und Fließverhalten enthaltend Polycarbonat (A), Pfropfpolymerisat mit kautschukelastischen Pfropfgrundlagen spezieller Teilchengröße (B) und thermoplastisches Vinylaromat(co)polymerisat (C), wobei die Mengenverhältnisse B zu C eingeschränkt sind. Silikon-Acrylat-Kompositkautschuke werden als kautschukelastische Propfgrundlage in dieser Anmeldung nicht offenbart.

EP-A 0537014 offenbart Zusammensetzungen mit verbesserter Tieftemperaturzähigkeit enthaltend ein thermoplastisches Harz, z.B. ein Polycarbonat, ein Vinylpolymer oder eine Mischung daraus, und eine schlagzähmodifizierende Menge eines speziellen multiphasigen, auf Polyorganosiloxan/Polyvinyl-Grundlage basierenden Pfropfpolymers. Zusammensetzungen aus Polycarbonat, Vinylpolymer und Pfropfpolymer, in welchem das Vinyl- und das Pfropfpolymer im bestimmten Mengenverhältnis eingesetzt werden, werden nicht offenbart.

EP-A 0486853 offenbart Zusammensetzungen mit verbesserter Einfärbbarkeit durch Verwendung von Pigmenten umfassend ein spezielles Pfropfpolymer auf Basis eines Polyorganosiloxan-Polyalkly(meth)acrylat-Compoundkautschuks und optional weitere Thermoplaste wie beispielsweise Polycarbonat.

EP-A 0430134 offenbart Zusammensetzungen mit exzellenter Schlagzähigkeit, Oberflächenhärte und Oberflächenqualität enthaltend Polycarbonat und ein spezielles Polyorganosiloxan-Pfropfpolymer auf Basis eines Kompositkautschuks als Pfropfgrundlage, welcher 1-10 Gew.-% Polyorganosiloxankautschuk und 99-90 Gew.-% Polyalkyl(meth)acrylatkautschuk in nicht separierbarer Form enthält. Es wird offenbart, dass die Zusammensetzungen darüber hinaus auch Vinylmonomer-basierende Homo- oder Copolymere enthalten können. Über besondere Eigenschaftsvorteile, die sich bei Verwendung der drei Komponenten im speziellen Mischungsverhältnis ergeben, schweigt diese Anmeldung.

EP-A 0307963 offenbart Zusammensetzungen mit guter Chemikalien-, Witterungs- und Wärmebeständigkeit sowie Schlagzähigkeit enthaltend Polycarbonat, Pfropfpolymer auf Basis einer Silikon-Butylacrylat-Kompositkautschukgrundlage und Vinylcopolymer. Die offenbarten Zusammensetzungen weisen jedoch ein ungünstiges Verhältnis von Pfropfpolymer- zu Vinylcopolymer-Gehalt auf. Die Einfärbung solcher Zusammensetzungen in dunkle und brilliante Farben erfordert hohe Mengen an Pigmenten, welche zu eine Verschlechterung der mechanischen Eigenschaften der Zusammensetzung führen.

EP-A 1334153 offenbart Zusammensetzungen mit verbesserter Wärmealterungsstabilität, hoher Oberflächengüte und guter Verarbeitbarkeit enthaltend Polycarbonat, Silkonacrylat-Kompositkautschuk-basierendes Pfropfpolymerisat, Vinylcopolymer und mineralischen Füllstoff (Glasfasern). Diese Zusammensetzungen weisen eine für viele Anwendungsbereiche unzureichende Zähigkeit - insbesondere bei tiefen Temperaturen auf.

Aufgabe der vorliegenden Erfindung ist die Bereitstellung von alterungsstabilen Polycarbonat-Zusammensetzungen und -Formmassen, die sich durch eine verbesserte Balance aus multiaxialer Tieftemperaturzähigkeit und Schmelzefließfähigkeit, durch gute Einfärbbarkeit und eine hohe Wärmeformbeständigkeit auszeichnen.

Insbesondere ist es Aufgabe der vorliegenden Erfindung alterungsstabile und auch in dunkle und brilliante Farben einfärbbare Polycarbonat-Zusammensetzungen für unlackierte Automobilinnenbauteile und Automobilkarosserieteile bereitzustellen, die bis herab zu -10°C kein splitterndes Bruchversagen in anwendungsrelevanten Duktilitätstests zeigen, eine Schmelzeviskosität gemessen bei 260°C und einer Scherrate von 1000 s⁻¹ von maximal 250 Pas sowie ein Wärmeformbeständigkeit gemessen als Vicat B 120 von mindestens 125°C aufweisen.

Es wurde überraschend gefunden, dass Zusammensetzungen bestehend aus
A) 70 - 80 Gew.-Teile (bezogen auf die Summe der Komponenten A + B + C) aromatisches Polycarbonat und/oder aromatisches Polyestercarbonat,
B) 4 - 12 Gew.-Teile, bevorzugt 5 - 10 Gew.-Teile, besonders bevorzugt 6 - 10 Gew.-Teile (bezogen auf die Summe der Komponenten A + B+ C) Pfropfpolymerisat mit
   B.1 10 bis 50 Gew.-%, vorzugsweise 20 bis 40 Gew.-% (jeweils bezogen auf das Pfropfpolymerisat B) einer Hülle aus mindestens einem Vinylmonomeren und
   B.2 90 bis 50 Gew.-%, vorzugsweise 80 bis 60 Gew.-%, (jeweils bezogen auf das Pfropfpolymerisat B) einer oder mehrerer Pfropfgrundlagen aus Silikon-Acrylat-Kompositkautschuk,
C) 12 - 25 Gew.-Teile, besonders bevorzugt 14 - 20 Gew.-Teile (bezogen auf die Summe der Komponenten A + B+ C) eines Vinylmonomer-basierenden Polymerisats oder Copolymersiats, und
D) 0 - 20 Gew.-Teile, bevorzugt 0,1 - 10 Gew.-Teile, besonders bevorzugt 0,2 - 5 Gew.-Teile (bezogen auf die Summe der Komponenten A + B+ C) Polymeradditive,
wobei die Komponenten B und C in einem Verhältnis der Gew.-Teile von B : C im Bereich 1 : 1,3 bis 1 : 3,5, bevorzugt im Bereich 1 : 1,5 bis 1 : 3,0, besonders bevorzugt im Bereich 1 : 1,6 bis 1 : 2,7 vorliegen,
wobei die Zusammensetzung frei von anorganischen Füllstoffen ist, und wobei das Polycarbonat aus Diphenolen hergestellt ist, ausgewählt aus der gruppe, die in Anspruch 1 definiert ist, und
wobei alle Gewichtsteilangaben in der vorliegenden Anmeldung so normiert sind, dass die Summe der Gewichtsteile der Komponenten A+B+C in der Zusammensetzung 100 ergeben,
das gewünschte Eigenschaftsprofil aufweisen.

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 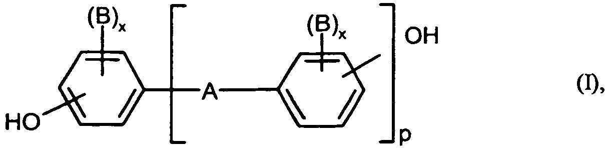 wobei
- A: eine Einfachbindung, C₁ bis C₅-Alkylen, C₂ bis C₅-Alkyliden, C₅ bis C₆-Cycloalkyliden,-O-, -SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 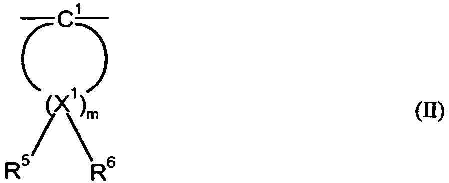 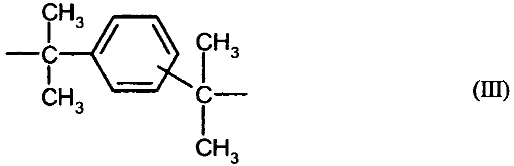
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅ alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hy-droxyphenyl)-diisopropyl-benzole sowie deren kernbromierte und/oder kernchlorierte Derivate. Besonders bevorzugte Diphenole sind 4,4'-Dihydroxydiphenyl, Bisphenol-A, 2,4-Bis(4-hydroxy-phenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di-und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxy-phenyl)-propan. Insbesondere bevorzugt ist 2,2-Bis-(4-hydroxyphenyl)-propan (Bisphenol-A). Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%, und 10 mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.
Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 mol-%, bezogen im Falle der phenolischen Kettenabbrecher auf Mol Diphenol und im Falle von Monocarbonsäurechlorid-Kettenabbrecher auf Mol Dicarbonsäuredichlorid.
Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phe-nyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihy-droxytri-phenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die aromatischen Polycarbonate und die aromatischen Polyestercarbonate haben in einer bevorzugter Ausführungsform der Erfindung ein gewichtsgemittelten Molekulargewicht (M_{w}, gemessen z. B. durch GPC, Ultrazentrifuge oder Streulichtmessung) von 22.000 bis 32.000 g/mol, besonders bevorzugt 24.000 bis 28.000 g/mol.

Die thermoplastischen, aromatischen Polycarbonate und Polyestercarbonate können allein oder im beliebigen Gemisch eingesetzt werden.

### Komponente B

Die Pfropfcopolymerisate B werden im allgemeinen durch radikalische Polymerisation, z.B. durch Emulsions-, Suspensions-, Lösungs- oder Massepolymerisation, vorzugsweise durch Emulsionspolymerisation hergestellt.

Geeignete Monomere B.1 sind Vinylmonomere wie Vinylaromaten und/oder kernsubstituierte Vinylaromaten (wie Styrol, α-Methylstyrol, p-Methylstyrol, p-Chlorstyrol), Methacrylsäure-(C₁-C₈)-Alkylester (wie Methylmethacrylat, Ethylmethacrylat, 2-Ethylhexylmethacrylat, Allylmethacrylat), Acrylsäure-(C₁-C₈)-Alkylester (wie Methylacrylat, Ethylacrylat, n-Butylacrylat, t-Butylacrylat), organische Säuren (wie Acrylsäure, Methacrylsäure), und/oder Vinylcyanide (wie Acrylnitril und Methacrylnitril), und/oder Derivate (wie Anhydride und Imide) ungesättigter Carbonsäuren (beispielsweise Maleinsäureanhydrid und N-Phenyl-Maleinimid). Diese Vinylmonomere können alleine oder in Mischungen von mindestens zwei Monomeren verwendet werden.

Bevorzugte Monomere B.1 sind ausgewählt aus mindestens einem der Monomere Styrol, Methylmethacrylat, n-Butylacrylat und Acrylnitril. Besonders bevorzugt wird als Monomer B.1 Methylmethacrylat oder eine Mischung aus Styrol und Acrylnitril eingesetzt.

Die Glasübergangstemperatur der Pfropfgrundlage B.2 beträgt < 10°C, vorzugsweise < 0°C, besonders bevorzugt < -20°C. Die Pfropfgrundlage B.2 hat im allgemeinen eine mittlere Teilchengröße (d₅₀-Wert) von 0,05 bis 10 µm, vorzugsweise 0,06 bis 5 µm, besonders bevorzugt 0,1 bis 1 µm.

Die mittlere Teilchengröße (d₅₀-Wert) ist der Durchmesser, oberhalb und unterhalb dessen jeweils 50 Gew.-% der Teilchen liegen. Er kann mittels Ultrazentrifugenmessung (W. Scholtan, H. Lange, Kolloid-Z. und Z. Polymere 250 (1972), 782-796) bestimmt werden.

Die Pfropfgrundlage B.2) sind Kompositkautschuke aus Silikonkautschuk und Acrylatkautschuk, wobei beispielsweise diese beiden Kautschuktypen als physikalisches Gemisch vorliegen oder wobei beispielsweise der Silikonkautschuk und Acrylatkautschuk herstellungsbedingt ein interpenetrierendes Netzwerk ausbilden oder beispielsweise der Silikonkautschuk und Acrylatkautschuk eine Pfropfgrundlage ausbilden, die eine Kern-Schale-Struktur aufweist. Bevorzugte Pfropfgrundlagen B.2) sind Kompositkautschuke von 10 bis 70 Gew.-%, besonders bevorzugt 20 bis 60 Gew.-% Silikonkautschuk und 90 bis 30 Gew.-%, besonders bevorzugt 80 bis 40 Gew.-% Butylacrylatkautschuk (die Angabe der Gew.-% ist hier jeweils bezogen auf die Pfropfgrundlage B.2).

Die Silikonacrylat-Kautschuke sind vorzugsweise Komposit-Kautschuke mit pfropfaktiven Stellen, wobei sich der Silikonkautschuk und Acrylatkautschuk im Komposit-Kautschuk gegenseitig durchdringen, so dass sie sich nicht wesentlich voneinander trennen lassen.

Silikonacrylat-Kautschuke sind bekannt und beispielsweise beschrieben in US 5,807,914, EP 430134 und US 4888388.

Bevorzugt werden Silikonkautschuk-Komponenten des Silikonacrylat-Kautschuks gemäß B.2 durch Emulsionspolymerisation hergestellt, bei der der Siloxan-Monomerbausteine, Vemetzungsoder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenyl-cyclotetrasiloxane, Octaphenylcyclotetrasiloxan eingesetzt.

Die Organosiloxan-Monomere können allein oder in Form von Mischungen mit 2 oder mehr Monomeren eingesetzt werden. Der Silikonkautschuk enthält vorzugsweise nicht weniger als 50 Gew.-% und besonders bevorzugt nicht weniger als 60 Gew.-% Organosiloxan, bezogen auf das Gesamtgewicht der Silikonkautschuk-Komponente.

Als Vernetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Das Vernetzungsmittel wird in einem Mengenbereich zwischen 0,1 und 40 Gew.%, bezogen auf das Gesamtgewicht der Silikonkautschuk-Komponente, eingesetzt. Die Menge an Vernetzungsmittel wird so gewählt, dass der Quellungsgrad des Silikonkautschuks, gemessen in Toluol, zwischen 3 und 30 liegt, bevorzugt zwischen 3 und 25, und besonders bevorzugt zwischen 3 und 15. Der Quellungsgrad ist definiert als das Gewichtsverhältnis zwischen der Menge Toluol, die durch den Silikonkautschuk absorbiert wird, wenn er mit Toluol bei 25°C gesättigt wird, und der Menge an Silikonkautschuk im getrockneten Zustand. Die Ermittlung des Quelleungsgrades ist im Detail in EP 249964 beschrieben.

Tetrafunktionelle Vernetzungsmittel sind bevorzugt gegenüber trifunktionellen, weil dann der Quellungsgrad einfacher kontrollierbarer innerhalb der oben beschriebenen Grenzen ist.

Als Pfropfmittel (V) geeignet sind Verbindungen, die fähig sind, Strukturen der folgenden Formeln zu bilden:

CH₂=C(R²)-COO-(CH₂)ₚ-SiR¹ₙO_{(3-n)/2} (V-1)

CH₂=CH-SiR¹ₙO_{(3-n)/2} (V-2)

oder

HS-(CH₂)ₚ-SiR¹ₙO_{(3-n)/2} (V-3),

wobei
- R¹: für C₁-C₄-Alkyl, vorzugsweise Methyl, Ethyl oder Propyl, oder Phenyl,
- R²: für Wasserstoff oder Methyl stehen,
- n: 0, 1 oder 2 und
- p: eine ganze Zahl von 1 bis 6 bedeuten.

Acryloyl- oder Methacryloyloxysilane sind besonders geeignet, die o.g. Struktur (V-1) zu bilden, und haben eine hohe Pfropfeffizienz. Dadurch wird eine effektive Bildung der Pfropfketten gewährleistet, und somit die Schlagzähigkeit der resultierenden Harzzusammensetzung begünstigt. Beispielhaft und bevorzugt seien genannt: β-Methacryloyloxy-ethyldimethoxymethyl-silan, γ-Methacryloyloxy-propylmethoxydimethyl-silan, γ-Methacryloyloxy-propyldimethoxymethyl-silan, γ- Methacryloyloxy-propyltrimethoxy-silan, γ-Methacryloyloxy-propylethoxydiethyl-silan, γ-Methacryloyloxy-propyldiethoxymethyl-silan, δ-Methacryloyl-oxy-butyldiethoxymethyl-silane oder Mischungen hieraus.

Bevorzugt werden 0 bis 20 Gew.-% Pfropfmittel bezogen auf das Gesamtgewicht des Silikonkautschuks eingesetzt.

Der Silikonkautschuk kann durch Emulsionspolymerisation hergestellt werden, wie beispielsweise in US 2891920 und US 3294725 beschrieben. Der Silikonkautschuk fällt dabei in Form eines wäßrigen Latex an. Dafür wird ein Gemisch enthaltend Organosiloxan, Vernetzungsmittel und gegebenenfalls Pfropfmittel unter Scherung mit Wasser vermischt, beispielsweise durch einen Homogenisator, in Gegenwart eines Emulgators auf in bevorzugter Ausführungsform Sulfonsäurebasis wie z.B. Alkylbenzolsulfonsäure oder Alkylsulfonsäure, wobei die Mischung zum Silikonkautschuklatex auspolymerisiert. Besonders geeignet ist eine Alkylbenzolsulfonsäure, da sie nicht nur als Emulgator, sondern auch als Polymerisationsinitiator wirkt. In diesem Fall ist eine Kombination der Sulfonsäure mit einem Metallsalz einer Alkylbenzolsulfonsäure oder mit einem Metallsalz einer Alkylsulfonsäure günstig, weil dadurch das Polymer während der späteren Pfropfpolymerisation stabilisiert wird.

Nach der Polymerisation wird die Reaktion beendet, indem die Reaktionsmischung durch Zugabe einer wäßrigen alkalischen Lösung neutralisiert wird, z.B. durch Zugabe einer wäßrigen Natriumhydroxid, Kaliumhydroxid oder Natriumcarbonat-Lösung.

Geeignete Polyalkyl(meth)acrylatkautschuk-Komponenten der Silikonacrylat-Kautschuke gemäß B.2 können hergestellt werden aus Methacrylsäurealkylestern und/oder Acrylsäurealkylestern, einem Vernetzungsmittel (VI) und einem Pfropfmittel (VII). Hierbei sind beispielhafte und bevorzugte Methacrylsäurealkylester und/oder Acrylsäurealkylester die C₁ bis C₈-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-C₁-C₈-alkylester, wie Chlorethylacrylat sowie Mischungen dieser Monomeren. Besonders bevorzugt ist n-Butylacrylat.

Als Vernetzungsmittel (VI) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.

Beispielhafte und bevorzugte Pfropfmittel (VII) sind Allylmethacrylat, Triallylcyanurat, Triallylisocyanurat oder Mischungen hieraus. Allylmethacrylat kann auch als Vernetzungsmittel (VI) eingesetzt werden. Die Pfropfmittel können alleine oder in Gemischen aus mindestens zwei Pfropfinitteln verwendet werden.

Die Menge an Vernetzungsmittel (VI) und Pfropfmittel (VII) beträgt 0,1 bis 20 Gew.%, bezogen auf das gesamte Gewicht der Polyalkyl(meth)acrylatkautschuk-Komponente des Silikonacrylat-Kautschuks.

Der Silikonacrylat-Kautschuk wird hergestellt, indem zunächst der Silikonkautschuk gemäß B.2.1 als wäßriger Latex hergestellt wird. Dieser Latex wird anschließend mit den zu verwendenden Methacrylsäurealkylestern und/oder Acrylsäurealkylestern, dem Vernetzungsmittel (VI) und dem Pfropfmittel (VII) angereichert, und eine Polymerisation wird durchgeführt. Bevorzugt ist eine radikalisch initiierte Emulsionspolymerisation, beispielsweise durch einen Peroxid-, einen Azooder Redoxinitiator. Besonders bevorzugt ist die Verwendung eines Redoxinitiatorsystems, speziell eines Sulfoxylat-Initiatorsystems hergestellt durch Kombiniation von Eisensulfat, Dinatriumethylendiamintetraacetat, Rongalit und Hydroperoxid.

Das Pfropfmittel (V), das bei der Herstellung des Silikonkautschuks verwendet wird, führt dabei dazu, daß der Polyalkyl(meth)acrylatkautschuk-Anteil kovalent an den Silikonkautschuk-Anteil angebunden wird. Bei der Polymerisation durchdringen sich die beiden Kautschuk-Komponenten gegenseitig und bilden so den Komposit-Kautschuk, der sich nach der Polymerisation nicht mehr in seine Bestandteile aus Silikonkautschuk-Komponente und Polyalkyl(meth)acrylatkautschuk-Komponente trennen läßt.

Zur Herstellung der als Komponente B) genannten Silikonacrylat-Pfropfpolymere B werden die Monomere B.1 auf die Kautschuk-Grundlage B.2. aufgepfropft.

Dabei können die beispielsweise in EP 249964, EP 430134 und US 4888388 beschriebenen Polymerisationsmethoden angewendet werden.

Beispielsweise erfolgt die Pfropfpolymerisation nach folgender Polymerisationsmethode: In einer ein- oder mehrstufigen radikalisch initiierten Emulsionspolymerisation werden die gewünschten Vinylmonomere B.1 auf die Pfropfgrundlage, die als wässriger Latex vorliegt, aufpolymerisiert. Die Pfropfeffizienz soll dabei möglichst hoch sein und beträgt bevorzugt größer oder gleich 10%. Die Pfropfeffizienz hängt maßgeblich vom verwendeten Pfropfmittel (V) bzw. (VII) ab. Nach der Polymerisation zum Silikon(acrylat)-Pfropfkautschuk wird der wäßrige Latex in heißes Wasser gegeben, in dem zuvor Metallsalze gelöst wurden, wie z.B. Calciumchlorid oder Magnesiumsulfat. Dabei koaguliert der Silikon(acrylat)-Pfropfkautschuk und kann anschließend separiert werden.

### Komponente C

Geeignet sind als Vinyl(Co)Polymerisate C Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
C.1 50 bis 99 Gew.-Teilen, vorzugsweise 60 bis 80 Gew.-Teilen, insbesondere 72 bis 78 Gew.-Teilen (bezogen auf Komponente C) Vinylaromaten und/oder kernsubstituierten Vinylaromaten wie Styrol, α-Methylstyrol, p-Methylstyrol, p-Chlorstyrol) und/oder (Meth)Acrylsäure-(C₁-C₈)-Alkylester, wie Methylmethacrylat, Ethylmethacrylat, und
C.2 1 bis 50 Gew.-Teilen, vorzugsweise 20 bis 40 Gew.-Teilen, insbesondere 22 bis 28 Gew.-Teilen (bezogen auf Komponente C) Vinylcyanide (ungesättigte Nitrile) wie Acrylnitril und Methacrylnitril und/oder (Meth)Acrylsäure-(C₁-C₈)-Alkylester, wie Methylmethacrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate C sind harzartig, thermoplastisch und kautschukfrei. Besonders bevorzugt wird als Komponente C Polymethylmethacrylat (PMMA) oder ein Vinylcopolymerisat enthaltend mindestens 70 Gew.-Teile (bezogen auf Komponente C) Methylmethacrylat und bis zu 30 Gew.-Teile (bezogen auf Komponente C) mindestens eines Comonomers ausgewählt aus der Gruppe Styrol, n-Butylacrylat, t-Butylacrylat und Ethylacrylat eingesetzt. Ein bevorzugtes Vinylcopolymerisat C ist auch ein Copolymer aus C.1 Styrol und C.2 Acrylnitril.

Die (Co)Polymerisate gemäß C sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

### Komponente D

Die Zusammensetzung kann weitere handelsübliche Polymeradditive wie Flammschutzmittel, Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasem, Carbon Nanotubes sowie organische Antistatika wie Polyalkylenether, Alkylsulfonate oder Polyamid-haltige Polymere), sowie Farbstoffe und Pigmente in solchen Mengen enthalten, die die mechanischen Eigenschaften der Zusammensetzung nicht insoweit schädigen, dass das Zieleigenschaftsprofil (kein splitterndes Bruchversagen bei -10°C) nicht mehr erfüllt wird.

Als Flammschutzmittel werden vorzugsweise phosphorhaltige Flammschutzmittel eingesetzt, insbesondere ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte, vorzugsweise halogenfreie Phosphorverbindungen können alleine oder in beliebiger Kombination mit anderen vorzugsweise halogenfreien Phosphorverbindungen eingesetzt werden. Beispielsweise sind als Phosphorverbindungen geeignet: Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Di- bzw. Oligophosphat und Bisphenol A verbrücktes Di- bzw. Oligophosphat. Der Einsatz von oligomeren Phosphorsäureestern, die sich vom Bisphenol A ableiten, ist insbesondere bevorzugt. Als Flammschutzmittel geeignete Phosphorverbindungen sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

### Herstellung der Formmassen und Formkörper

Die erfindungsgemäßen thermoplastischen Formmassen werden hergestellt, indem man die jeweiligen Bestandteile in bekannter Weise vermischt und bei Temperaturen von 200°C bis 340°C, bevorzugt bei 240 bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern.

Die erfindungsgemäßen Formmassen können zur Herstellung von Formkörpern jeder Art verwendet werden. Diese können zum Beispiel durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Die erfindungsgemäßen Formmassen können beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Besonders geeignet sind die erfindungsgemäßen Formmassen für die Herstellung von (unlackierten) Automobilinnenbauteilen und Karosserieteilen, welche dem Einfluss von Licht, Wärme und ggf. Witterung widerstehen müssen.

Die folgenden Beispiele dienen der weiteren Erläuterung der Erfindung.

### Beispiele

### Komponente A1

Lineares Polycarbonat auf Basis Bisphenol-A mit einem gewichtsgemittelten Molekulargewicht M̅_{w} von 25.000 g/mol (bestimmt durch GPC).

### Komponente B1

Pfropfpolymerisat bestehend aus 28 Gew.-% Styrol-Acrylnitril Copolymer als Hülle mit einem Verhältnis von Styrol zu Acrylnitril von 71:29 auf 72 Gew.-% einer Pfropfgrundlage als Kern bestehend aus 46 Gew.-% Silikonkautschuk und 54 Gew.-% Butylacrylatkautschuk, hergestellt in Emulsionspolymerisation.

### Komponente B2 (Vergleich)

Pfropfpolymerisat bestehend aus 40 Gew.-% Styrol-Acrylnitril Copolymer mit einem Verhältnis von Styrol zu Acrylnitril von 72 : 28 Gew.-% als Hülle auf 60 Gew.-% einer teilchenförmigen Pfropfgrundlage als Kern bestehend aus reinem Polybutadienkautschuk, hergestellt in Emulsionspolymerisation.

### Komponente B3 (Vergleich)

Pfropfpolymerisat bestehend aus 39 Gew.-% Styrol-Acrylnitril Copolymer als Hülle auf 61 Gew.-% einer Pfropfgrundlage als Kern bestehend aus Butylacrylatkautschuk, hergestellt in Emulsionspolymerisation.

### Komponente B4 (Vergleich)

Pfropfpolymerisat bestehend aus 40 Gew.-% Styrol-Acrylnitril Copolymer mit einem Verhältnis von Styrol zu Acrylnitril von 76 : 24 Gew.-% als Hülle auf 60 Gew.-% einer Silikonkautschuk-Pfropfgrundlage als Kern, hergestellt in Emulsionspolymerisation.

### Komponente C

Styrol/Arylnitril-Copolymerisat mit einem Styrol/Acrylnitril-Gewichtsverhältnis von 76:24 Gew.-% und einem mittleren Molekulargewicht Mw von 100.000 g/mol (Messung per GPC in Dimethylformamid bei 20°C).

### Komponente D

**D1:** Pentaerythrittetrastearat als Gleit-/Entformungsmittel
**D2:** Thermostabilisator, Irganox^{®} B 900, Fa. Ciba Speciality Chemicals
**D3:** UV-Schutzmittel Tinuvin 329, Fa. Ciba Speciality Chemicals
**D4:** Black Pearls 800, Fa. Cabot Europa G.I.E., Suresnes, Frankreich

### Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Massetemperatur von 260°C und mit einem Entgasungsvakuum von 100 mbar compoundiert und nachfolgend granuliert. Die fertigen Granulate werden auf einer Spritzgussmaschine zu den entsprechenden Probekörpern verarbeitet (Massetemperatur 260 °C, Werkzeugtemperatur 80°C).

Zur Charakterisierung der Eigenschaften der Probekörper werden folgende Methoden angewandt:

Als Maß für die Tieftemperaturduktilität im praxisrelevanten Schlag-/Crashversuch dient das Verhalten im multiaxialen Durchstoßversuch. Der Durchstoßversuch in Anlehnung an ISO 6603-2 bei einer Temperatur von -10°C an Prüfkörpern der Abmessung 60 mm x 60 mm x 2 mm durchgeführt. Dabei wird zum einen die maximale Energieaufnahme bestimmt, zum anderen werden insbesondere die Bruchbilder von insgesamt zehn Prüfkörpern dahingehend beurteilt, ob im überwiegenden Anteil (mind. 90 %) der Prüfungen, d.h. bei mindestens 9 von 10 Experimenten ein splitterfreies Versagen auftritt.

Als Maß für die Wärmeformbeständigkeit dient der Vicat B120-Wert gemessen gemäß ISO 306 an Prüfkörpern der Abmessung 80 mm x 10 mm x 4 mm.

Als Maß für die Schmelzefließfähigkeit im Spritzguss dient die Schmelzeviskosität bei 260°C und einer Scherrate von 1000 s⁻¹ gemessen in Anlehnung an ISO 11443.

Als Maß für die Einfärbbarkeit dient der an Zusammensetzungen enthaltend 0,75 Gew.-Teile Ruß in Reflexion gemäß DIN 6174 gemessene L-Wert.

**Tabelle 1: Zusammensetzungen und ihre Eigenschaften**

| **Zusammensetzung** | **1** | **2** | **3** | **4** | **5** | **6** | **7** | **8** |
|---|---|---|---|---|---|---|---|---|
| **[Gew.-Teile]** | **(Vgl.)** | | | **(Vgl.)** | **(Vgl.)** | **(Vgl.)** | **(Vgl.)** | **(Vgl.)** |
| A-1 | 75 | 75 | 75 | 75 | 75 | 75 | 75 | 75 |
| B-1 | 4 | 7 | 9 | 12 | | | | |
| B-2 | | | | | 7 | | | |
| B-3 | | | | | | 7 | | 3,5 |
| B-4 | | | | | | | 7 | 3,5 |
| C-1 | 21 | 18 | 16 | 13 | 18 | 18 | 18 | 18 |
| D-1 | 0,75 | 0,75 | 0,75 | 0,75 | 0,75 | 0,75 | 0,75 | 0,75 |
| D-2 | 0,1 | 0,1 | 0,1 | 0,1 | 0,1 | 0,1 | 0,1 | 0,1 |
| D-3 | 0,8 | 0,8 | 0,8 | 0,8 | 0,8 | 0,8 | 0,8 | 0,8 |
| D-4 | 0,75 | 0,75 | 0,75 | 0,75 | 0,75 | 0,75 | 0,75 | 0,75 |
| | | | | | | | | |
| Gew.-Verhältnis von B : C | 1 : 5,25 | 1 : 2,57 | 1 : 1,78 | 1 : 1,08 | 1 : 2,57 | 1 : 2,57 | 1 : 2,57 | 1 : 2,57 |
| Doppelbindungsfreier Kautschuk | ja | ja | ja | ja | nein | ja | ja | ja |
| | | | | | | | | |

| **Eigenschaften** | | | | | | | | |
|---|---|---|---|---|---|---|---|---|
| splitterndes Bruchverhalten bei -10°C | ja | nein | nein | nein | nein | ja | nein | ja |
| Energieaufnahme bei -10°C [J] | 39 | 42 | 38 | 39 | 38 | 28 | 41 | 41 |
| Schmelzeviskosität (260°C/1000s⁻¹) [Pas] | 214 | 227 | 230 | 260 | 230 | 210 | 228 | 228 |
| Vicat B120 [°C] | 132 | 132 | 132 | 132 | 132 | 131 | 132 | 132 |
| Reflexion L | 28,6 | 29,8 | 29,8 | 30,3 | 27,9 | 27,4 | 31,6 | 29,2 |

Die Beispiele in Tabelle 1 zeigen, dass die Eigenschaftsvorteile gemäß der Aufgabe dieser Erfindung nur bei solchen Zusammensetzungen resultieren, in denen Pfropfpolymeriat B und Vinyl(co)polymerisat C in dem erfindungsgemäß bestimmten Verhältnis zueinander vorliegen und als Pfropfpolymerisat B ein solches basierend auf einem Silikon-Acrylat-Kompositkautschuk als Pfropfgrundlage zum Einsatz kommt (siehe die erfindungsgemäßen Beispiele 2 und 3). Übersteigt das Pfropfpolymerisat B den erlaubten Anteil, so resultieren Formmassen mit schlechter Einfärbbarkeit und hoher Schmelzeviskosität, d.h. mangelhaftem Verarbeitungsverhalten (Vergleichsbeispiel 4). Wird zu wenig Pfropfpolymerisat B eingesetzt, so resultiert eine unzureichende multiaxiale Tieftemperaturduktilität (Vergleichsbeispiel 1).

Bei Verwendung von auf reinem Acrylatkautschuk basierendem Pfropfpolymer resultiert ebenfalls eine unzureichende multiaxiale Tieftemperaturduktilität (Vergleichsbeispiel 6). Verwendung von auf reinem Silikonkautschuk basierendem Pfropfpolymer resultiert in mangelhafter Einfärbbarkeit (Vergleichsbeispiel 7). Kommt eine Mischung aus zwei Pfropfpolymerisaten auf Basis von a) reinem Acrylatkautschuk und b) reinem Silikonkautschuk zum Einsatz, so resultiert wiederum eine unzureichende multiaxiale Tieftemperaturduktilität (Vergleichsbeispiel 8). Bei Verwendung von Butadienkautschuk-basierenden Pfropfpolymerisaten werden zwar gute Duktiltiäten, Fließfähigkeiten und Einfärbbarkeiten realisiert (Vergleichsbeispiel 5), allerdings zeigen solche Zusammensetzungen naturgemäß aufgrund der oxidationsempfindlichen, weil ungesättigten Kautschukgrundlage eine für viele Anwendungsbereiche unzureichende Alterungsbeständigkeit gegenüber Wärme-, Licht- und Witterungseinflüssen.

## Patentansprüche

1. Zusammensetzungen bestehend aus
A) 70 - 80 Gew.-Teile (bezogen auf die Summe der Komponenten A + B + C) aromatisches Polycarbonat und/oder aromatisches Polyestercarbonat,
B) 4 - 12 Gew.-Teile (bezogen auf die Summe der Komponenten A + B+ C) Pfropfpolymerisat mit
B.1 10 bis 50 Gew.-% (bezogen auf das Pfropfpolymerisat B) einer Hülle aus mindestens einem Vinylmonomeren und
B.2 90 bis 50 Gew.-% (bezogen auf das Pfropfpolymerisat B) einer Pfropfgrundlage aus Silikon-Acrylat-Kompositkautschuk,
C) 12 - 25 Gew.-Teile (bezogen auf die Summe der Komponenten A + B+ C) eines Vinylmonomer-basierenden harzartigen, thermoplastischen und kautschukfreien Polymerisats oder Copolymersiats, und
D) 0 - 20 Gew.-Teile Polymeradditive,
wobei die Komponenten B und C in einem Verhältnis der Gew.-Teile von B : C im Bereich von 1 : 1,3 bis 1 : 3,5 vorliegen, und wobei die Zusammensetzung frei von anorganischen Füllstoffen ist, und wobei das Polycarbonat aus Diphenolen hergestellt ist, ausgewählt aus der Gruppe, die besteht aus, Dihydroxydiphenolen, Bis-(hydroxyphenyl)-C₁-C₅-alkanen, Bis-(hydrox-yphenyl)-C₅-C₆-cycloalkanen, Bis-(hydroxy---phenyl)-ethern, Bis-(hy-droxy-phenyl)-sulfoxiden, Bis-(hydroxyphenyl)-ketonen, Bis-(hy-droxyphenyl)-sulfonen, und a,a-Bis-(hy-droxy-phenyl)-diisopropyl-benzolen sowie deren kernbromierten und/oder kernchlorierten Derivaten und 1,1-Bis-(4-hydroxyphenyl)-3.3.5-trimethylcyclohexan, und
wobei alle Gewichtsteilangaben in der vorliegenden Anmeldung so normiert sind, dass die Summe der Gewichtsteile der Komponenten A+B+C in der Zusammensetzung 100 ergeben,

2. Zusammensetzungen gemäß Anspruch 1 enthaltend
A) 70 - 80 Gew.-Teile (bezogen auf die Summe der Komponenten A + B + C) aromatisches Polycarbonat und/oder aromatisches Polyestercarbonat,
B) 6 - 10 Gew.-Teile (bezogen auf die Summe der Komponenten A + B+ C) Pfropfpolymerisat,
C) 14 - 20 Gew.-Teile (bezogen auf die Summe der Komponenten A + B+ C) eines Vinylmonomer-basierenden Polymerisats oder Copolymersiats, und
D) 0,2 - 5 Gew.-Teile (bezogen auf die Summe der Komponenten A + B+ C) Polymeradditive.
wobei die Komponenten B und C in einem Verhältnis der Gew.-Teile von B : C im Bereich von 1 : 1,6 bis 1 : 2,7 vorliegen.

3. Zusammensetzungen gemäß Anspruch 1 oder 2 enthaltend als Pfropfgrundlage B.2) einen Kompositkautschuk aus 10 bis 70 Gew.-% Silikonkautschuk und 90 bis 30 Gew.-% Butylacrylatkautschuk (die Angabe der Gew.-% ist hier jeweils bezogen auf die Pfropfgrundlage B.2).

4. Zusammensetzungen gemäß Anspruch 3 enthaltend als Pfropfgrundlage B.2) einen Kompositkautschuk aus 20 bis 60 Gew.-% Silikonkautschuk und 80 bis 40 Gew.-% Butylacrylatkautschuk (die Angabe der Gew.-% ist hier jeweils bezogen auf die Pfropfgrundlage B.2).

5. Zusammensetzungen gemäß Anspruch 1 bis 4 enthaltend als Komponente A aromatisches Polycarbonat und/oder aromatisches Polyestercarbonat mit einem gewichtsgemittelten Molekulargewicht (M_{w}, gemessen z. B. durch GPC, Ultrazentrifuge oder Streulichtmessung) von 22.000 bis 32.000 g/mol.

6. Zusammensetzungen gemäß Anspruch 5 enthaltend als Komponente A aromatisches Polycarbonat und/oder aromatisches Polyestercarbonat mit einem gewichtsgemittelten Molekulargewicht von 24.000 bis 28.000 g/mol

7. Zusammensetzungen gemäß Anspruch 1 bis 6 enthaltend als Pfropfgrundlage B.2 einen Silikonacrylat- Kompositkautschuk mit pfropfaktiven Stellen, wobei sich der Silikonkautschuk und Acrylatkautschuk im Komposit-Kautschuk gegenseitig durchdringen, so dass sie sich nicht wesentlich voneinander trennen lassen.

8. Zusammensetzungen gemäß Anspruch 1 bis 7 enthaltend als Pfropfhülle B.1 Methylmethacrylat oder eine Mischung aus Styrol und Acrylnitril.

9. Zusammensetzungen gemäß Anspruch 1 bis 8 enthaltend als Komponente C (Co)-Polymerisate aus
C.1 50 bis 99 Gew.-Teilen Vinylaromaten und/oder kernsubstituierten Vinylaromaten und/oder (Meth)Acrylsäure-(C₁-C₈)-Alkylester und
C.2 1 bis 50 Gew.-Teilen Vinylcyanide und/oder (Meth)Acrylsäure-(C₁-C₈)-Alkylester, und/oder ungesättigte Carbonsäuren und/oder Anhydride ungesättigter Carbonsäuren und Imide ungesättigter Carbonsäuren.

10. Zusammensetzungen gemäß Anspruch 9 enthaltend als Komponente C ein Copolymerisat aus C.1 Styrol und C.2 Acrylnitril.

11. Zusammensetzungen gemäß Anspruch 9 enthaltend als Komponente C Polymethylmethacrylat (PMMA) oder ein Vinylcopolymerisat enthaltend mindestens 70 Gew.-Teile (bezogen auf Komponente C) Methylmethacrylat und bis zu 30 Gew.-Teile (bezogen auf Komponente C) mindestens eines Comonomers ausgewählt aus der Gruppe Styrol, n-Butylacrylat, t-Butylacrylat und Ethylacrylat.

12. Zusammensetzungen gemäß Anspruch 1 bis 11 enthaltend als Komponente D mindestens ein Polymeradditiv ausgewählt aus der Gruppe bestehend aus Flammschutzmittel, Flammschutzsynergisten, Antidrippingmittel, Gleit- und Entformungsmittel, Nukleiermittel, Stabilisatoren, Antistatika, Farbstoffe und Pigmente.

13. Verwendung der Zusammensetzung gemäß Anspruch 1 bis 12 zur Herstellung von Formteilen.

14. Formteile, enthaltend eine Zusammensetzung gemäß Anspruch 1 bis 12.

## Claims

1. A composition consisting of:
A) from 70 to 80 parts by weight, based on the sum of components A + B + C, of an aromatic polycarbonate and/or an aromatic polyester carbonate,
B) from 4 to 12 parts by weight, based on the sum of components A + B + C, of a graft polymer comprising
B.1 from 10 to 50 wt. %, based on the graft polymer B, of a shell of at least one vinyl monomer, and
B.2 from 90 to 50 wt. %, based on the graft polymer B, of a graft base of a silicone-acrylate composite rubber,
C) from 12 to 25 parts by weight, based on the sum of components A + B + C, of a resinous, thermoplastic and rubber-free polymer or copolymer based on a vinyl monomer, and
D) from 0 to 20 parts by weight of polymer additives,
wherein components B and C are present in a ratio of the parts by weight of B:C in a range from 1:1.3 to 1:3.5, and wherein the composition is free of inorganic fillers, and wherein the polycarbonate is prepared from diphenols selected from the group consisting of dihydroxydiphenols, bis(hydroxyphenyl)-C₁-C₅-alkanes, bis(hydroxyphenyl)-C₅-C₆-cycloalkanes, bis(hydroxylphenyl)ethers, bis(hydroxyphenyl) sulfoxides, bis(hydroxyphenyl) ketones, bis(hydroxyphenyl) sulfones, and a,a,-bis(hydroxyl-phenyl)diisopropylbenzenes and also their ring-brominated and/or ring-chlorinated derivatives and 1,1-bis(4-hydroxyphenyl)-3.3.5-trimethylcyclohexane, and wherein all parts by weight in the present application are standardized such that the sum of the parts by weight of components A+B+C in the composition is 100.

2. A composition according to claim 1, comprising
A) from 70 to 80 parts by weight, based on the sum of components A + B + C, of an aromatic polycarbonate and/or an aromatic polyester carbonate,
B) from 6 to 10 parts by weight, based on the sum of components A + B + C, of a graft polymer,
C) from 14 to 20 parts by weight, based on the sum of components A + B + C, of a polymer or copolymer based on a vinyl monomer, and
D) from 0.2 to 5 parts by weight, based on the sum of components A + B + C, of polymer additives,
wherein components B and C are present in a ratio of the parts by weight of B:C in a range from 1:1.6 to 1:2.7.

3. A composition according to claim 1 or 2 comprising as the graft base B.2, a composite rubber comprising from 10 to 70 wt. % silicone rubber and from 90 to 30 wt. % butyl acrylate rubber, based in each case on the weight of graft base B.2.

4. A composition according to claim 3 comprising as the graft base B.2, a composite rubber comprising from 20 to 60 wt. % silicone rubber and from 80 to 40 wt. % butyl acrylate rubber, based in each case on the weight of graft base B.2.

5. A composition according to claim 1 to 4 comprising as component A, an aromatic polycarbonate and/or aromatic polyester carbonate having a weight-average molecular weight M_{w}, measured, for example, by GPC, ultracentrifuge or scattered-light measurement, of from 22,000 to 32,000 g/mol.

6. A composition according to claim 5 comprising as component A, an aromatic polycarbonate and/or aromatic polyester carbonate having a weight-average molecular weight of from 24,000 to 28,000 g/mol.

7. A composition according to claim 1 to 6 comprising as the graft base B.2, a silicone-acrylate composite rubber having graft-active sites, wherein the silicone rubber and the acrylate rubber interpenetrate in the composite rubber so that said silicone rubber and said acrylate rubber cannot substantially be separated from each another.

8. A composition according to claim 1 to 7 comprising as the graft shell B.1, a methyl methacrylate or a mixture of styrene and acrylonitrile.

9. A composition according to claim 1 to 8 comprising as component C, (co)polymers of
C.1 from 50 to 99 parts by weight of a vinyl aromatic compound and/or a vinyl aromatic compound substituted on the ring and/or a (meth)acrylic acid (C₁-C₈)-alkyl ester, and
C.2 from 1 to 50 parts by weight of a vinyl cyanide and/or a (meth)acrylic acid (C₁-C₈)-alkyl ester and/or an unsaturated carboxylic acid and/or an anhydride of an unsaturated carboxylic acid and an imide of an unsaturated carboxylic acid.

10. A composition according to claim 9 comprising as component C, a copolymer of C.1 styrene and C.2 acrylonitrile.

11. A composition according to claim 9 comprising as component C, polymethyl methacrylate (PMMA) or a vinyl copolymer comprising at least 70 parts by weight, based on component C, of methyl methacrylate and up to 30 parts by weight, based on component C, of at least one comonomer selected from the group consisting of styrene, n-butyl acrylate, tert-butyl acrylate and ethyl acrylate.

12. A composition according to claim 1 to 11 comprising as component D, at least one polymer additive selected from the group consisting of flameproofing agents, flameproofing synergists, antidripping agents, lubricants and mould release agents, nucleating agents, stabilisers, antistatics, colourings and pigments.

13. The use of the composition according to claim 1 to 12 for producing mouldings.

14. A moulding comprising a composition according to claim 1 to 12.

## Revendications

1. Compositions constituées de
A) 70 - 80 parties en poids (par rapport à la somme des composants A + B + C) de polycarbonate aromatique et/ou polyestercarbonate aromatique,
B) 4 - 12 parties en poids (par rapport à la somme des composants A + B + C) de polymérisat greffé avec
B.1 10 à 50 % en poids (par rapport au polymérisat greffé B) d'une enveloppe à base d'au moins un monomère vinylique et
B.2 90 à 50 % en poids (par rapport au polymérisat greffé B) d'une base de greffage à base de caoutchouc composite silicone-acrylate,
C) 12 - 25 parties en poids (par rapport à la somme des composants A + B + C) d'un polymérisat ou copolymérisat de type résine, thermoplastique et exempt de caoutchouc, à base de monomère vinylique, et
D) 0 - 20 parties en poids d'additifs pour polymères, les composants B et C se trouvant en un rapport des parties en poids de B : C dans la plage de 1 : 1,3 à 1 : 3,5, et la composition étant exempte de charges inorganiques, et le polycarbonate étant préparé à partir de diphénols choisis dans le groupe qui est constitué par des dihydroxydiphénols, bis-(hydroxy-phényl)-alcanes(C₁-C₅), bis-(hydroxyphényl)-cyclo-alcanes(C₅-C₆), bis-(hydroxyphényl)-éthers, bis-(hydroxyphényl)-sulfoxydes, bis-(hydroxyphényl)-cétones, bis-(hydroxyphényl)-sulfones et α,α-bis-(hydroxyphényl)-diisopropyl-benzènes ainsi que leurs dérivés bromés sur le noyau et/ou chlorés sur le noyau et le 1,1-bis-(4-hydroxyphényl)-3,3,5-triméthyl-cyclohexane, et
toutes les données en parties en poids dans la présente demande étant normalisées de sorte que la somme des parties en poids des composants A+B+C dans la composition est égale à 100.

2. Compositions selon la revendication 1, contenant
A) 70 - 80 parties en poids (par rapport à la somme des composants A + B + C) de polycarbonate aromatique et/ou polyestercarbonate aromatique,
B) 6 - 10 parties en poids (par rapport à la somme des composants A + B + C) de polymérisat greffé,
C) 14 - 20 parties en poids (par rapport à la somme des composants A + B + C) d'un polymérisat ou copolymérisat à base de monomère vinylique, et
D) 0,2 - 5 parties en poids (par rapport à la somme des composants A + B + C) d'additifs pour polymères,
Les composants B et C se trouvant en un rapport des parties en poids de B : C dans la plage de 1 : 1,6 à 1 : 2,7.

3. Compositions selon la revendication 1 ou 2, contenant en tant que base de greffage B.2) un caoutchouc composite constitué de 10 à 70 % en poids de caoutchouc silicone et 90 à 30 % en poids de caoutchouc acrylate de butyle (la donnée des % en poids est ici chaque fois par rapport à la base de greffage B.2).

4. Compositions selon la revendication 3, contenant en tant que base de greffage B.2) un caoutchouc composite constitué de 20 à 60 % en poids de caoutchouc silicone et 80 à 40 % en poids de caoutchouc acrylate de butyle (la donnée des % en poids est ici chaque fois par rapport à la base de greffage B.2).

5. Compositions selon l'une quelconque des revendications 1 à 4, contenant en tant que composant A un polycarbonate aromatique et/ou un polyestercarbonate aromatique ayant une masse moléculaire moyenne en poids (M_{w}, mesurée par exemple par GPC, ultracentrifugation ou mesure de la diffusion de la lumière) de 22 000 à 32 000.

6. Compositions selon la revendication 5, contenant en tant que composant A un polycarbonate aromatique et/ou un polyestercarbonate aromatique ayant une masse moléculaire moyenne en poids de 24 000 à 28 000 g/mole.

7. Compositions selon l'une quelconque des revendications 1 à 6, contenant en tant que base de greffage B.2 un caoutchouc composite silicone-acrylate à sites actifs pour le greffage, le caoutchouc silicone et le caoutchouc acrylate dans le caoutchouc composite s'interpénétrant réciproquement, de sorte qu'ils ne peuvent pratiquement pas être séparés.

8. Compositions selon l'une quelconque des revendications 1 à 7, contenant en tant qu'enveloppe de greffage B.1 du méthacrylate de méthyle ou un mélange de styrène et d'acrylonitrile.

9. Compositions selon l'une quelconque des revendications 1 à 8, contenant en tant que composant C des (co)polymérisats de
C.1 50 à 99 parties en poids de composés vinylaromatiques et/ou de composés vinylaromatiques substitués sur le noyau et/ou de (méth)acrylates d'alkyle en C₁-C₈ et
C.2 1 à 50 parties en poids de cyanures de vinyle et/ou de (méth)acrylates d'alkyle en C₁-C₈ et/ou d'acides carboxyliques insaturés et/ou d'anhydrides d'acides carboxyliques insaturés et d'imides d'acides carboxyliques insaturés.

10. Compositions selon la revendication 9, contenant en tant que composant C un copolymérisat de C.1 styrène et C.2 acrylonitrile.

11. Compositions selon la revendication 9, contenant en tant que composant C du poly(méthacrylate de méthyle) (PMMA) ou un copolymérisat vinylique contenant au moins 70 parties en poids (par rapport au composant C) de méthacrylate de méthyle et jusqu'à 30 parties en poids (par rapport au composant C) d'au moins un comonomère choisi dans le groupe constitué par le styrène, l'acrylate de n-butyle, l'acrylate de tert-butyle et l'acrylate d'éthyle.

12. Compositions selon l'une quelconque des revendications 1 à 11, contenant en tant que composant D au moins un additif pour polymères, choisi dans le groupe constitué par des agents ignifuges, des agents synergiques ignifuges, des agents anticoulure, des lubrifiants et agents de démoulage, des agents de nucléation, des stabilisants, des agents antistatiques, des colorants et des pigments.

13. Utilisation de la composition selon l'une quelconque des revendications 1 à 12, pour la production de pièces moulées.

14. Pièces moulées, contenant une composition selon l'une quelconque des revendications 1 à 12.
